# EUROPEAN PATENT APPLICATION

(11) **EP 4 707 352 A1**
(43) Date of publication of application: **11.03.2026**
(21) Application number: 24901744.3
(22) Date of filing: 17.10.2024

(54) **BONDING STRUCTURE, BONDING METHOD, INSULATING ADHESIVE TAPE AND BATTERY**

(30) Priority: 01.07.2024 CN 202421523866 U; 01.07.2024 CN 202410866786
(71) Applicant: Eve Power Co., Ltd., Jingmen, Hubei 448000 (CN)
(72) Inventor: LIN, Chenneng, Jingmen, Hubei 448000 (CN); CHEN, Liquan, Jingmen, Hubei 448000 (CN); SONG, Shuaishuai, Jingmen, Hubei 448000 (CN); YUAN, Dingding, Jingmen, Hubei 448000 (CN)
(74) Representative: Berggren Oy
(86) International application number: PCT/CN2024/125494
(87) International publication number: WO 2026/007270

(57) **Abstract**

The present disclosure provides a bonding structure, a bonding method, an insulating adhesive tape, and a battery. The insulating adhesive tape includes a first bonding area and a second bonding area disposed at intervals, and a non-bonding area disposed between the first bonding area and the second bonding area. The first bonding area is configured to bond a cell, the second bonding area is configured to bond a welding area formed by a tab of the cell and a current collector, and the non-bonding area is configured to correspond to a bending area of the tab.

## Description

The present disclosure claims priority to Chinese Patent Application No. 202421523866.6, filed on July 1, 2024 and Chinese Patent Application No. 202410866786.9, filed on July 1, 2024, the disclosure of which are incorporated herein by reference in their entireties.

### TECHNICAL FIELD

The present disclosure relates to the technical field of batteries, and in particular, to a bonding structure, an bonding method, an insulating adhesive tape, and a battery.

### BACKGROUND

In the field of battery technology, after the tabs are welded to the cell, it is generally necessary to use an insulating adhesive tape to bond the cell and the tabs to achieve insulation protection.

### SUMMARY

However, the existing insulating adhesive tape adopts an entire piece of back adhesive. When the insulating adhesive tape is bonded to a tab, the bending area of the tab is also bonded by the back adhesive surface of the insulating adhesive tape. During process of applying an adhesive and cell-folding, bending of the tabs causes a displacement of the adhesive tape, which in turn generates tearing stress to the tabs and can easily cause the tabs to tear.

The present disclosure provides a bonding structure, which includes:
one or more cells, each of the one or more cells being connected with at least one bendable tab;
a current collector welded to one side of the at least one tab away from the one or more cells and defining a welding area on the current collector; and
one or more insulating adhesive tapes, each of the one or more insulating adhesive tape having a first bonding area and a second bonding area disposed at intervals, and a non-bonding area disposed between the first bonding area and the second bonding area, the first bonding area being bonded to the one or more cells, the second bonding area being bonded to the welding area, and the non-bonding area corresponding to a bending area of the tab;
wherein, in a first direction, the tab has a first side and a second side disposed opposite to each other, each of the one or more insulating adhesive tapes has a first redundant bonding area extending out of the first side, each of the one or more insulating adhesive tapes further has a second redundant bonding area extending out of the second side, both the first redundant bonding area and the second redundant bonding area are bonded to the one or more insulating adhesive tapes, a length of each of the one or more insulating adhesive tapes is L, a width of the tab is W, and a sum of widths of the first redundant bonding area and the second redundant bonding area is X1, wherein L≥W+X1.

The present disclosure further provides a bonding method as described above, and the bonding method includes:
welding the tab to the current collector and defining a welding area on the current collector;
bonding the first bonding area to the one or more cells and extending the first extension area of the non-bonding area to the one or more cells; and
bonding the second bonding area to the welding area and extending the second extension area of the non-bonding area to the current collector.

The present disclosure further provides an insulating adhesive tape. The insulating adhesive tape includes a first bonding area and a second bonding area disposed at intervals, and a non-bonding area disposed between the first bonding area and the second bonding area, wherein the first bonding area is configured to bond a cell, the second bonding area is configured to bond a welding area formed by a tab of the cell and a current collector, and the non-bonding area is configured to correspond to a bending area of the tab.

The present disclosure further provides a battery, which includes a shell and one or more cells accommodated in the shell, the one or more cells is connected to the current collector and the tabs by using the insulating adhesive tape as described above.

### BENEFICIAL EFFECTS

According to the insulating adhesive tape provided in the present disclosure, a first bonding area, a non-bonding area and a second bonding area are disposed on the insulating adhesive tape. The first bonding area is configured to bond a cell, the second bonding area is configured to bond a welding area, and the non-bonding area is configured to cover a bending area of the tab. When the tab is bent, since there is no connection between the non-bonding area and the tab, the non-bonding area can improve the problem of the insulating adhesive tape causing tearing stress on the tab, and can prevent the tab from being torn by the insulating adhesive tape.

### BRIEF DESCRIPTION OF THE DRAWINGS

FIG. 1 is one of top views of a bonding structure according to embodiments of the present disclosure.
FIG. 2 is one of front views of the bonding structure provided in FIG. 1.
FIG. 3 is another one of the front views of the bonding structure provided in FIG. 1.
FIG. 4 is a front view of the bonding structure provided in FIG. 1 after the tab is bent.
FIG. 5 is is another one of the top views of the bonding structure according to embodiments of the present disclosure.
FIG. 6 is a front view of the bonding structure provided in FIG. 5.
FIG. 7 is a front view of the bonding structure provided in FIG. 5 after the tab is bent.
FIG. 8 is a front view of a bonding structure according to embodiments of the present disclosure in a state where two cells are stacked.
FIG. 9 is a front view of the bonding structure provided in FIG. 8 after the tab is bent.
FIG. 10 is one of front views of an insulating adhesive tape according to embodiments of the present disclosure.
FIG. 11 is another one of the front views of an insulating adhesive tape according to embodiments of the present disclosure.
FIG. 12 is yet another one of the front views of an insulating adhesive tape according to embodiments of the present disclosure.

### List of reference signs:

100, cell; 200, insulating adhesive tape; 201, first bonding area; 202, non-bonding area; 203, second bonding area; 204, third bonding area; 300, tab; 400, top cover; 500, connecting sheet.

### DETAILED DESCRIPTION

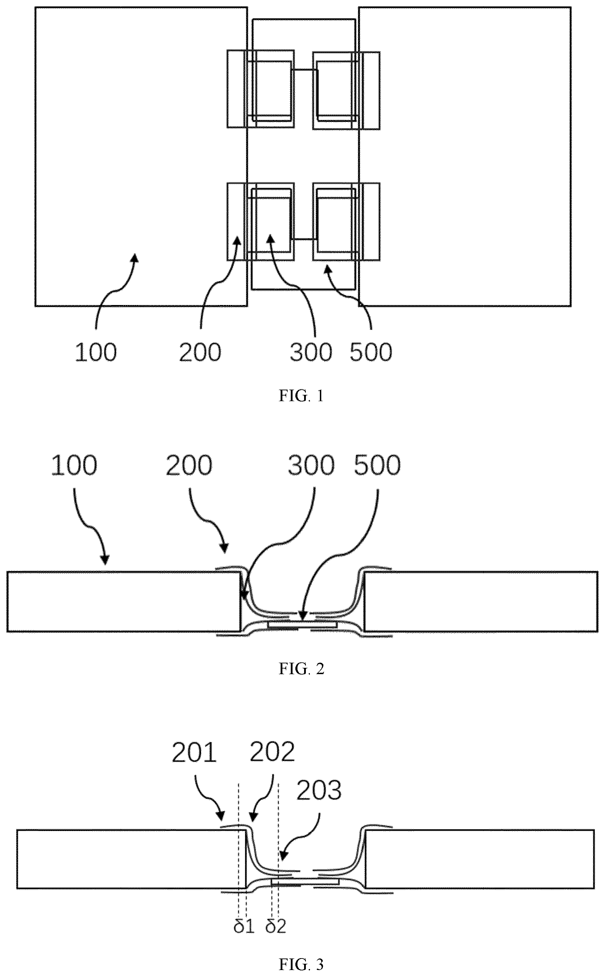

In particular, referring to FIGs. 1 to 12, embodiments of the present disclosure provides a bonding structure. The bonding structure includes cells 100, current collectors, and insulating adhesive tapes 200. The cell 100 is connected with a bendable tab 300. The current collector is welded to one side of the tab 300 away from the cell 100, and defining a welding area on the current collector. The insulating adhesive tape 200 has a first bonding area 201 and a second bonding area 203 disposed at intervals, and a non-bonding area 202 disposed between the first bonding area 201 and the second bonding area 203. The first bonding area 201 is bonded to the cell 100. The second bonding area 203 is bonded to the welding area. The non-bonding area 202 corresponds to the bending area of the tab 300. In a first direction, the tab 300 has a first side and a second side disposed opposite to each other. The insulating adhesive tape 200 has a first redundant bonding area extending out of the first side. The insulating adhesive tape 200 further has a second redundant bonding area extending out of the second side. Both the first redundant bonding area and the second redundant bonding area are bonded to the current collector. A length of the insulating adhesive tape 200 is L, a width of the tab is W, and a sum of widths of the first redundant bonding area and the second redundant bonding area is X1, wherein L≥W+X1.

In some embodiments, the first bonding area 201, a non-bonding area 202 and a second bonding area 203 are disposed on the insulating adhesive tape 200. The first bonding area 201 is bonded to a cell 100. The second bonding area 203 is bonded to a welding area of the tab 300 and the current collector. The non-bonding area 202 covers a bending area of the tab 300. When the tab 300 is bent, since there is no connection between the non-bonding area 202 and the tab 300, the non-bonding area 202 can improve the problem of the insulating adhesive tape 200 causing tearing stress on the tab 300, and can prevent the tab 300 from being torn by the insulating adhesive tape 200.

It can be understood that since the first bonding area 201 is bonded to the cell 100, the second bonding area 203 is bonded to the welding area, the non-bonding area 202 may be attached to the bending area of the tab 300 but not bonded thereto, or the non-bonding area 202 may be spaced from the bending area of the tab 300. When the tab 300 is bent, the bending of the tab 300 will hardly cause displacement of the first bonding area 201 and the second bonding area 203. The only area that can be displaced is the non-bonding area 202 of the insulating adhesive tape 200. Since the non-bonding area 202 cover the tab 300, it will be difficult for the non-bonding area 202 to exert a tearing stress on the tab 300, and the tab 300 can be prevented from being torn.

The current collector and the cell body are disposed at intervals, one end of the tab 300 is connected to the cell body, and the other end of the tab 300 is connected to the current collector. The bending area of the tab 300 is the position on the tab 300 between the cell 100 and the current collector. During the bending of the tab 300, this part of the area will be bent.

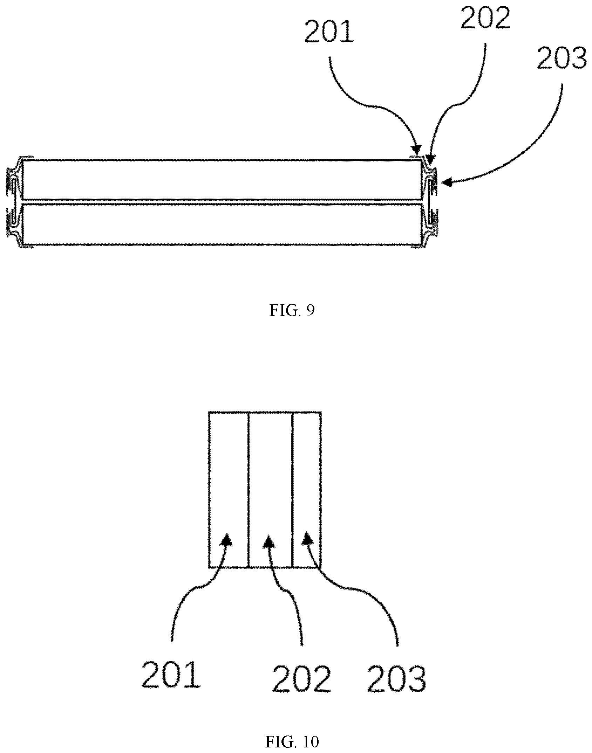

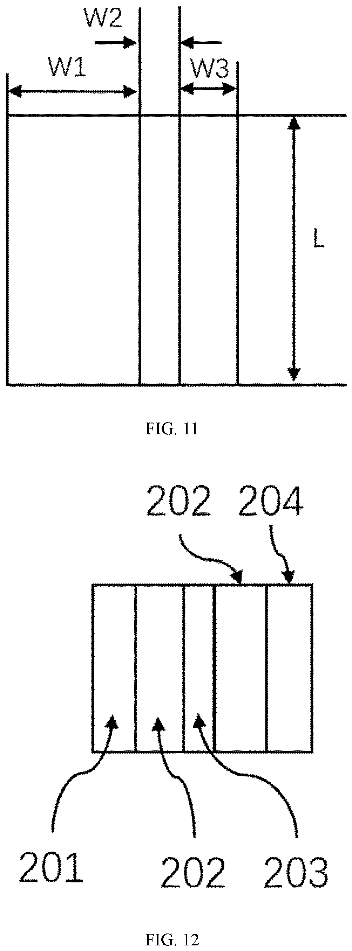

As shown in FIGs. 10 and 11, since the length L of the insulating adhesive tape 200 is greater than the width W of the tab 300, the insulating adhesive tape 200 can completely cover the tab 300 in the width direction of the tab 300 to ensure the insulating effect. Further, by making the length L of the insulating adhesive tape 200 equal to or greater than the sum of the width W of the tab 300 and a first redundancy amount X1, it can be ensured that the insulating adhesive tape 200 can exceed edge of the tab 300 in the width direction of the tab 300.

When the insulating adhesive tape 200 is bonded to the cell 100 and the welding area, each side of the insulating adhesive tape 200 in the length direction can exceed the tab 300 by a certain distance. That is, in the first direction, the insulating adhesive tape 200 is made to exceed the width of at least the first redundant bonding area on the first side of the tab 300, and the insulating adhesive tape 200 is made to exceed the width of at least the second redundant bonding area on the second side of the tab 300, thereby ensuring that the insulating tape 200 completely covers the tab 300, thus ensuring insulation. For example, in the first direction, the central axis of the insulating adhesive tape 200 coincides with the central axis of the tab 300. As a result, the insulating adhesive tape 200 can be centrally bonded to the cell 100 and the welding area, and opposite sides of the insulating adhesive tape 200 extend beyond the first side and the second side of the tab 300 by 0.5 mm, respectively, to ensure that the tab 300 is completely insulated.

Based on the fact that the insulating adhesive tape 200 is centrally disposed on the tab 300 along the width direction of the tab 300 in the first direction, after the first bonding area 201 and the second bonding area 203 of the insulating adhesive tape 200 are bonded to the cell 100 and the welding area, respectively, both sides of the insulating adhesive tape 200 can be extended by the same distance from both sides of the tab 300. In this way, insulation and aesthetics of both sides of the tab 300 can be ensured.

As shown in FIG. 11, the first direction is the length direction of the insulating adhesive tape 200, and the second direction described below is the width direction of the insulating adhesive tape 200, so that the first direction is perpendicular to the second direction.

Please continue to refer to FIG. 11, in some embodiments, the first redundancy amount X1=1.0×2 mm. That is, the first redundancy amount X1 is preset to be as 2.0 mm. When the insulating adhesive tape 200 is centrally bonded to the tab 300, each side of the insulating adhesive tape 200 in the first direction can extend at least 1 mm beyond the tab 300 to ensure that the tab 300 is completely insulated.

In other embodiments of the present disclosure, the first redundancy amount X1 may also be values such as 3.0 mm, 4.0 mm, 5.0 mm, 6.0 mm, etc., to ensure that the insulating tape 200 can completely insulate the tab 300.

In some embodiments, the non-bonding area 202 covers the bending area of the tab 300, and the range of the bending area of the tab 300 is less than or equal to the range of the non-bonding area 202. That is, the non-bonding area 202 can completely cover the bending area of the tab 300, thereby preventing occurrence of phenomena such as tearing or the like after the tab 300 is bent, which is caused by the connection between the first bonding area 201 and the second bonding area 203 and the bending area of the tab 300.

In some embodiments, the non-bonding area 202 do not completely cover the bending area of the tab 300. At this time, the first bonding area 201 and/or the second bonding area 203 will have an extended bonding area extending to the bending area of the tab 300. A width of the extended bonding area of the first bonding area 201 attached to the bending area of the tab 300 is D1, wherein D1≤5.0 mm. A width of the extended bonding area of the second bonding area 203 attached to the bending area of the tab 300 is D2, wherein D2≤5.0 mm.

The width D1 of the extended bonding area of the first bonding area 201 is its extension distance along the second direction. The width D2 of the extended bonding area of the second bonding area 203 is also its extension distance along the second direction. The second direction is perpendicular to the first direction.

It can be understood that the first bonding area 201 may have an extended bonding area bonded to a portion of the bending area of the tab 300. The extended bonding area does not completely cover the bending area of the tab 300, but only partially contacts it. As a result, when the tab 300 is bent, the tab 300 at the position of the extended bonding area can not form enough stress to tear the tab 300. Therefore, it is also possible to avoid the phenomenon of tearing or the like after the tab 300 is bent.

The extended bonding area of the first bonding area 201 allows the first bonding area 201 to be partially bonded to the bending area of the tab 300, thereby improving the bonding stability of the insulating adhesive tape 200. Meanwhile, since bonding area between the extended bonding area of the first bonding area 201 and the bending area of the tab 300 is small, it is difficult for the insulating adhesive tape 200 to cause tearing of the tab 300 when the tab 300 is bent.

The second bonding area 203 may have an extended bonding area bonded to a portion of the bending area of the tab 300. The extension bonding area contacts a portion area of the tab 300. As a result, when the tab 300 is bent, it is also difficult for the tab 300 at the position of the extended bonding area to form a stress sufficient to tear the tab 300. Therefore, it is also possible to avoid the phenomenon of tearing or the like after the tab 300 is bent.

The extended bonding area of the second bonding area 203 allows the second bonding area 203 to be partially bonded to the bending area of the tab 300, thereby improving the bonding stability of the insulating adhesive tape 200. Meanwhile, since bonding area between the extended bonding area of the second bonding area 203 and the bending area of the tab 300 is small, it is difficult for the insulating adhesive tape 200 to cause tearing of the tab 300 when the tab 300 is bent.

In some embodiments, an extended bonding area may be formed only on the first bonding area 201; it is also possible to form an extended bonding area only on the second bonding area 203; and it is also possible to form extended bonding areas on both the first bonding area 201 and the second bonding area 203. As long as it is ensured that it is difficult to tear the tab 300 during bending of the tab 300 after being bonded to the bending area of the tab 300.

For example, the width D1 of the extended bonding area of the first bonding area 201 bonded to the bending area of the tab 300 can be set to 1 mm, 2 mm, 3 mm, 4 mm, 5 mm, or any value between the two. The width D2 of the extended bonding area of the second bonding area 203 bonded to the bending area of the tab 300 can be set to 1 mm, 2 mm, 3 mm, 4 mm, 5 mm, or any value between the two.

The aforementioned widths D1 and D2 both referred to the second direction described below.

The cell 100 is an important component of the battery. The cell 100 mainly includes positive electrode active materials, a positive electrode current collector, a separator, negative electrode active materials, and a negative electrode current collector, and the like. The charging and discharging of the cell 100 is performed by storing and releasing energy through the deintercalation of lithium. The outermost separator of the cell 100 is bonded to the insulating adhesive tape 200. The outermost coating of the cell 100 can also be bonded to the first bonding area 201 of the insulating adhesive tape 200, wherein the coating on the outermost layer of the cell 100 is an insulating film covering the outermost layer of the cell 100.

The current collector is a welding component of the tab 300, which can be a top cover 400, or a combination of the top cover 400 and the connecting sheet 500. The current collector may be welded to the tabs 300 by laser welding, ultrasonic welding, or the like. After welding, an electronic channel can be formed to realize electric transmission. After the welding is completed, a welding area with a certain width will be formed in the welding area.

The insulating adhesive tape 200 is made of an insulating materials. The insulating adhesive tape 200 can insulate the tab 300 from the shell of the battery after the tab 300 is bent. The shell of a battery is usually aluminum. Therefore, the insulating adhesive tape 200 mainly plays an insulating role to prevent contact between the tab 300 and the aluminum shell, thus avoiding safety problem caused by thermal runaway resulting from contacting between the tab 300 and the aluminum shell.

It can be understood that the side of the insulating adhesive tape 200 facing the cell 100 and the current collector is the bonding side, and the side of the insulating adhesive tape 200 facing away from the cell 100 and the current collector is the non-bonding side. The bonding side is configured to bond the cell 100 and the welding area.

The insulating adhesive tape 200 may be provided in a strip shape. In the width direction of the insulating adhesive tape 200, its adhesive side has a first bonding area 201 and a second bonding area 203 that are disposed at intervals, and the area between the first bonding area 201 and the second bonding area 203 is a non-bonding area 202. As a result, the first bonding area 201, the non-bonding area 202, and the second bonding area 203 can be sequentially distributed along the length direction of the insulating adhesive tape 200.

Please continue to refer to FIG. 11, in some embodiments, the width of the first bonding area 201 in the second direction is W1, wherein W1≥5.0 mm. The second direction is perpendicular to the first direction.

Since the width W1 of the first bonding area 201 in the second direction is greater than or equal to 5.0 mm, a sufficient bonding area between the insulating adhesive tape 200 and the cell 100 is ensured, thereby ensuring the bonding strength.

For example, the width W1 of the first bonding area 201 may be set to 5.0 mm, 5.5 mm, 6.0 mm, 7.0 mm, 8.0 mm, or the like, or any value therebetween. The width of the first bonding area 201 can be reasonably selected based on the bonding effect and the cost of the insulating adhesive tape 200.

Please continue to refer to FIG. 11, in some embodiments, in the second direction, the width of the second bonding area 203 is W3, the width of the welding area is W4, the tab 300 is clamped and welded to the current collector by a jig, and the clamping width of the tab 300 is W5, wherien W3≥W4+W5.

It can be understood that when welding the tab 300 to the current collector, it is necessary to fix the position of the tab 300 and the current collector by auxiliary mechanisms such as jigs and clamps to prevent relative movement between the tab 300 and the current collector during welding and affect the welding quality. The clamping area is usually located on the side of the welding area away from the cell 100. Therefore, at a position away from the cell 100, the second bonding area 203 needs to bond both the welding area and the clamping area, so as to achieve complete coverage of the tab 300. In embodiments of the present disclosure, the width W3 of the second bonding area 203 is made greater than the sum of the width W4 of the welding area and the clamping width W5 of the tab 300, thereby ensuring that the second bonding area 203 completely covers the tab 300 located on one side of the current collector.

In some embodiments, W3≥W4+W5+X2, wherein X2 is a preset second redundancy amount.

Further, the width W3 of the second bonding area 203 is made greater than the sum of the width W4 of the welding area, the clamping width W5 of the tab 300, and the second preset value X2, so that the second bonding area 203 can extend beyond the clamping area by a certain distance, ensuring that the second bonding area 203 can extend to the position of the current collector, so that the second bonding area 203 completely covers the tab 300 on the side of the current collector.

In some embodiments, the second redundancy amount X2=2.0 mm. That is, the second redundancy amount X2 is preset to be as 2.0 mm. When the insulating adhesive tape 200 is centrally bonded to the tab 300, the second bonding area 203 can be at least 2 mm beyond the tab 300 to ensure that the tab 300 is completely insulated.

In other embodiments of the present disclosure, the second redundancy amount X2 may also be values such as 3.0 mm, 4.0 mm, 5.0 mm, 6.0 mm, etc., so as to ensure that the insulating adhesive tape 200 can completely insulate the tab 300.

Please continue to refer to FIGs. 3 and 11, in some embodiments, the width of the non-bonding area 202 in the second direction is W2. The non-bonding area 202 has a first extension area extending to the cell 100. The width of the first extension area is δ1. The non-bonding area 202 further has a second extension area extending to the current collector. The width of the second extension area is δ2. The width of the bending area of the tab 300 is S. The relationship among W2, δ1, δ2 and S satisfies: W2≥δ1+S+δ2, wherein δ1≥0.5 mm and δ2≥0.5 mm.

In a case that W2≥δ1+S+δ2, before the tab 300 is bent, the non-bonding area 202 can be disposed loosely, so that the non-bonding area 202 has a certain redundancy amount after the tab 300 is bent, thereby the problem of the non-bonding area 202 pulling the first bonding area 201 and the second bonding area 203 is improved. As a result, the problem of the insulating adhesive tape 200 generating tearing stress on the tab 300 after the tab 300 is bent can be improved.

In a case that W2=δ1+S+δ2, the insulating adhesive tape 200 can also prevent the non-bonding area 202 from pulling the first bonding area 201 and the second bonding area 203 based on its own elasticity. Therefore, it is ensured that it is difficult for the insulating adhesive tape 200 to tear the tab 300 after the tab 300 is bent.

It should be noted that the width S of the bending area of the tab 300 is a distance that the tab 300 extends in the second direction after being bent.

Since the non-bonding area 202 can be extended to the cell 100 and the current collector, the first bonding area 201 and the second bonding area 203 can be effectively prevented from being bonding to the bending area of the tab 300, and the tab 300 can be prevented from being torn and pulled by the first bonding area 201 and the second bonding area 203 during the bending process of the tab 300.

Since the non-bonding area 202 will also cover the entire range of the bending area of the tab 300, the width W2 of the non-bonding area 202 will be equal to the sum of the width S of the bending area of the tab 300, the width δ1 of the first extension area, and the width δ2 of the second extension area.

The width S of the bending area of the tab 300 can be reasonably set based on different types of batteries, types of cells 100, and models of current collectors. For example, the width S of the bending area of the tab 300 may be set to 3.0 mm, 4.0 mm, 5.0 mm, 6.0 mm, or the like.

Among which, δ1≥0.5 mm. For example, the width δ1 of the first extension area may be set to 0.5 mm, 1.0 mm, 1.5 mm, 2.0 mm, or the like. δ2≥0.5 mm. For example, the width δ2 of the second extension area may be set to 0.5 mm, 1.0 mm, 1.5 mm, 2.0 mm, or the like.

Values of the width S of the bending area, the width δ1 of the first extension area, and the width δ2 of the second extension area may be reasonably selected based on various factors such as types of batteries, types of cells 100, models of current collectors, and cost of the insulating adhesive tape 200. As long as the first bonding area 201 and the second bonding area 203 are kept away from the bending area of the tab 300, so that the bending area of the tab 300 can release stress during the bending process to prevent tearing.

In some embodiments, one side of the first bonding area 201 facing the cell 100 is provided with a first adhesive layer, and the first adhesive layer is a colored adhesive layer.

It can be understood that the first adhesive layer is a back adhesive disposed on the side of the first bonding area 201 facing the cell 100. The back adhesive may be an acrylic adhesive, a polyimide (PI) adhesive, or the like. Since the first adhesive layer is a colored adhesive layer, the first adhesive layer can be identified by a visual identification system, so that a mechanical equipment knows which side of the insulating adhesive tape 200 is the bonding side, thereby realizing a foolproof design and preventing bonding errors, and the like.

Since the first adhesive layer is a colored adhesive layer, the first adhesive layer can also be recognized by the visual recognition system. By identifying the first adhesive layer through the visual recognition system, it can be determined whether the bonding is completed, and the bonding size between the cell 100 and the insulating adhesive tape 200 can be detected.

For example, the first adhesive layer is a gray adhesive layer, a yellow adhesive layer, a red adhesive layer, a blue adhesive layer, or the like, so long as the first adhesive layer can form a color difference with white. The color of the first adhesive layer is not limited in embodiments of the present disclosure.

In some embodiments, one side of the second bonding area 203 facing the welding area is provided with a second adhesive layer, and the second adhesive layer is a colored adhesive layer.

It can be understood the second adhesive layer is a back adhesive disposed on the side of the second bonding area 203 facing the welding area. The back adhesive can be selected from an acrylic adhesive, a polyimide (PI) adhesive, or the like. Since the second adhesive layer is a colored adhesive layer, the second adhesive layer can be identified by the visual identification system, so that the mechanical equipment knows which side of the insulating adhesive tape 200 is the bonding side, thereby realizing a foolproof design and preventing bonding errors, and the like.

Since the second adhesive layer is a colored adhesive layer, the second adhesive layer can also be recognized by the visual recognition system. By recognizing the second adhesive layer by the visual recognition system, it can be determined whether the bonding is completed, and the bonding size between the current collector and the insulating adhesive tape 200 can be detected.

For example, the second adhesive layer is a gray adhesive layer, a yellow adhesive layer, a red adhesive layer, a blue adhesive layer, or the like, so long as the second adhesive layer can form a color difference with white. The color of the second adhesive layer is not limited in embodiments of the present disclosure.

In some embodiments, the color of the second adhesive layer is the same as that of the first adhesive layer, both of which can adopt a back adhesive with the same color. For example, both the first adhesive layer and the second adhesive layer are blue adhesive layers.

In some embodiments, the color of the second adhesive layer is different from that of the first adhesive layer, both of which adopts a colored back adhesive. For example, the first adhesive layer is a blue adhesive layer and the second adhesive layer is a yellow adhesive layer.

The aforementioned first adhesive layer and the second adhesive layer are both non-transparent colored adhesive layers, so that the first adhesive layer and the second adhesive layer can be recognized by the visual recognition system.

In some embodiments, the non-bonding area 202 is a transparent area.

It can be understood that since the non-bonding area 202 is a transparent area, the information of the tab 300 located inside the non-bonding area 202 can be identified by a visual identification system. After the tabs 300 are bent, the visual recognition system can identify the state of the tabs 300 below through the non-bonding area 202, so as to judge whether a tab 300 is torn or not, and detect the size of the tab 300 after the tearing occurs. In this way, defective cells 100 can be excluded, and the potential safety hazard caused by the defective cells 100 flowing into the market can be prevented.

The transparency of the non-bonding area 202 needs to reach a certain degree, within which the visual recognition system can penetrate through the non-bonding area 202 and recognize the tabs below. The transparency of the non-bonding area 202 is specifically selected according to the recognition ability of the visual recognition system, and the transparency of the non-bonding area 202 is not limited in embodiments of the present disclosure.

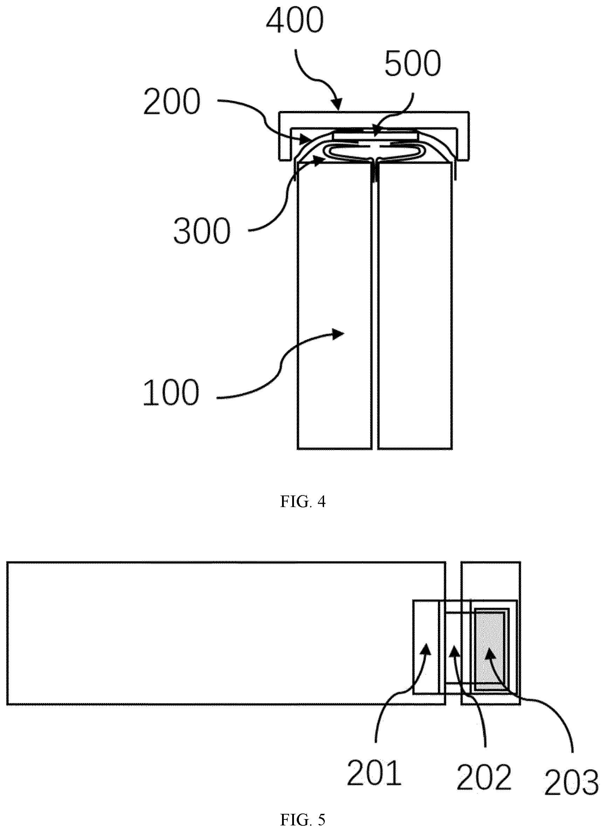

As shown in FIGs. 5 to 9, in some embodiments, the current collector includes a top cover 400. The tabs 300 are welded to the top cover 400, and a welding area is defined on the top cover 400. The polarity of any two tabs 300 welded to the same top cover 400 is the same.

The top cover 400 is used as a current collector, the tabs 300 are welded to the top cover 400 and a welding area is defined on the top cover 400, and the welding area and the cell 100 are bonded by the insulating adhesive tape 200, and then the tabs 300 are bent. After the bending is completed, it can be put into a shell.

It can be understood that any two tabs 300 welded to the same top cover 400 can be both positive tabs. Any two tabs 300 welded to the same top cover 400 may also be both negative tabs.

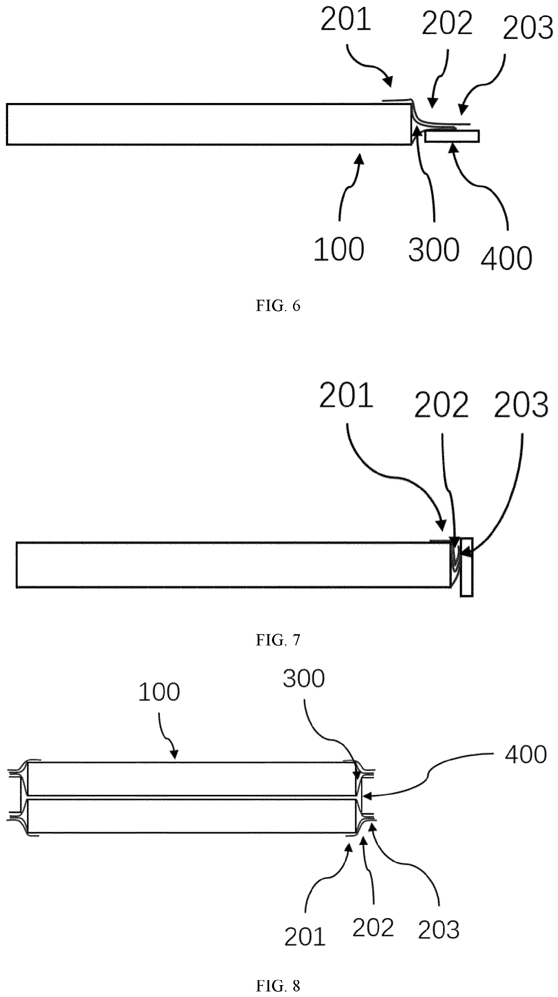

As shown in FIGs. 6 and 7, the process of forming a battery by using a bonding structure generally includes steps as follows:
S110, welding tabs 300 to a top cover 400 by laser, and defining a welding area.
S120, bonding cells 100 and the welding area by using an insulating adhesive tape 200, so that the first bonding area 201 is bonded to the cell 100, the second bonding area 203 is bonded to the welding area, and the non-bonding area 202 is attached to the bending area of the tabs 300.
S130, bending the tabs 300.
S 140, putting the bonding structure in which the tabs 300 are bent into a shell to form a battery.

As shown in FIGs. 8 and 9, in some embodiments, wherein one side of the top cover 400 is configured with a first connecting portion and a second connecting portion that are bendable. The first connecting portion and the second connecting portion are disposed at intervals. At least two cells 100 are provided. The first connecting portion is welded to the tab 300 of one of the cells 100, and the first connecting portion is configured to be bent in a bending direction of the tab 300 under an action of an external force. The second connecting portion is welded to the tab 300 of another cell 100, and the second connecting portion is configured to be bent in a bending direction of this tab 300 under an action of an external force.

As shown in FIG. 8, for two adjacent cells 100, the two cells 100 may be stacked. The top cover 400 is disposed on one side of the two stacked cells 100, or two opposite sides of the two stacked cells 100 are respectively provided with a top cover 400. The top cover 400 may be centrally disposed between the two cells 100. Each cell 100 is provided with a tab 300, and each tab 300 is ultrasonically welded to a first connection portion and a second connection portion, respectively.

Each of the first connecting portion and the second connecting portion is a pin integrally formed on the top cover 400.

In some embodiments, the first connecting portion and the second connecting portion are located on the same side of the top cover 400 close to the edges. As shown in FIG. 9, the first connecting portion and the second connecting portion may be bent in a direction approaching each other under the action of an external force. At this time, the first connecting portion and the second connecting portion can be attached to the top cover 400 after being bent. The first connecting portion and the second connecting portion may be bent away from each other under the action of an external force. At this time, the first connecting portion and the second connecting portion may be disposed coplanar with the top cover 400 after being bent.

It can be understood that for two adjacent cells 100, when the bending directions of the two tabs 300 are close to each other, the first connecting portion and the second connecting portion are bent in a direction close to each other under the action of an external force. When the bending directions of the two tabs 300 are away from each other, the first connecting portion and the second connecting portion are bent away from each other under the action of an external force.

It should be noted that the external force mentioned in the embodiments of the present disclosure may be a force of the mechanical arm driving the first connecting portion and the second connecting portion to bend, or a force that drives the first connecting portion and the second connecting portion to bend by manual bending.

The top cover 400 is used as a current collector, the tabs 300 are welded to the first connecting portion and the second connecting portion of the top cover 400, a welding area is defined on the first connecting portion and the second connecting portion, respectively, and the welding area and the cell 100 are bonded by the insulating adhesive tape 200, and then the tabs 300 are bent. After the bending is completed, it can be put into a shell.

Please continue to refer to FIGs. 8 and 9, the process of forming a battery by using the bonding structure generally includes steps as follows:
S210, welding tabs 300 of the two cells 100 to the first connecting portion and the second connecting portion of the top cover 400 by laser, respectively, and defining a welding area on the first connecting portion and the second connecting portion, respectively.
S220, bonding the welding area on the first connecting portion and the corresponding cell 100, and bonding the welding area on the second connecting portion and the corresponding cell 100 by using two insulating adhesive tapes 200, so that the first bonding area 201 is bonded to the cell 100, the second bonding area 201 is bonded to the welding area, and the non-bonding area 202 is bonded to the bending area of the tab 300.
S230, bending the tabs 300, and bending the first connecting portion and the second connecting portion based on the bending direction of the tabs 300.
S240, putting the bonding structure in which the tabs 300 are bent into a shell to form a battery.

As shown in FIG. 4, in some embodiments, the current collector includes a tab 500 and a top cover 400. The tabs 300 are welded to the connecting sheet 500, and a welding area is defined on the connecting sheet 500. Any two tabs 300 welded to the same connecting sheet 500 have the same polarity. The top cover 400 is connected to the side of the connecting sheet 500 away from the cell 100.

The current collector is formed by introducing a connecting sheet 500 and cooperating with the top cover 400. At this time, the tabs 300 can be welded to the connecting sheet 500, and there is no need to directly connect the tabs 300 with the top cover 400. After the tabs 300 are welded to the connecting sheet 500, they are bonded by the insulating adhesive tape 200, and the top cover 400 is welded to the side of the connecting sheet 500 away from the cell 100, so that the insulation between the tabs 300 and the aluminum shell can be ensured after being put into the shell.

It can be understood that any two tabs 300 welded to the same tab 500 may be both positive tabs. Alternatively, any two tabs 300 welded to the same tab 500 may also be negative tabs.

Two opposite sides of the connecting sheet 500 may be connected to the cell 100 through the insulating adhesive tape 200. When the number of the cells 100 and the number of the connecting sheet 500 are both set to one, the connecting sheet 500 and the cells 100 are bonded by two insulating adhesive tapes 200. The first bonding area 201 of one of the two insulating adhesive tapes 200 is bonded to the upper surface of the cell 100, the second bonding area 203 of this insulating adhesive tape 200 is bonded to the welding area on the upper surface of the connecting sheet 500, and the non-bonding area 202 of this insulating adhesive tape 200 is located above the bending area of the tab 300. The first bonding area 201 of the other insulating adhesive tape 200 is bonded to the lower surface of the cell 100, the second bonding area 203 of this insulating adhesive tape 200 is bonded to the welding area of the lower surface of the connecting sheet 500, and the non-bonding area 202 of this insulating adhesive tape 200 is located below the bending area of the tab 300.

As shown in FIG. 2, when the number of the cells 100 is set to two, each cell 100 has only one tab 300, and the number of the connecting sheet 500 is set to one, four insulating adhesive tapes 200 can be used to bond the connecting sheet 500 and the cells 100.

As shown in FIG. 12, in some embodiments, the insulating adhesive tape 200 further includes a third bonding area 204. The first bonding area 201, the second bonding area 203, and the third bonding area 204 are sequentially disposed at intervals, so as to form the non-bonding area 202 between the first bonding area 201 and the second bonding area 203, and to form the non-bonding area 202 between the second bonding area 203 and the third bonding area 204, respectively. Two cells 100 are provided. The first bonding area 201 is bonded to one of the cells 100, the third bonding area 204 is bonded to another one of the cells 100, and the tabs 300 of the two cells 100 are welded to a same connecting sheet 500 to form two welding areas disposed at intervals on the connecting sheet 500. The second bonding area 203 is bonded to the two welding areas and an area between the two welding areas, and the two non-bonding areas 202 are respectively covered on the bending areas of the tabs 300 of the two cells 100.

It can be understood that the insulating adhesive tape 200 having the first bonding area 201, the second bonding area 203, and the third adhesive region 204 has three adhesive areas. As shown in FIG. 2, before cells 100 are folded, the two cells 100 are horizontally distributed to the left and right, and a connecting sheet 500 is located between the two cells 100. The tabs 300 of each cell 100 are welded to the left and right sides of the connecting sheet 500, respectively. Therefore, two welding areas can be formed on the connecting sheet 500. The first bonding area 201 is bonded to one of the cells 100, and the third bonding area 204 is bonded to the other of the cells 100, so that the second bonding area 203 completely covers the two welding areas and area between the two welding areas, so that one insulating adhesive tape 200 can bond two cells 100 and one connecting sheet 500. After the bonding is completed, the two cells 100 are folded in a direction where large surfaces are close to each other, thereby realizing bending of the tabs 300 and completing the cell-folding process.

When the insulating adhesive tape 200 is used to bond two cells 100, it can facilitate the rapid bonding of insulating adhesive tape 200 and improve the bonding efficiency.

When bonding the connecting sheet 500, since the connecting sheet 500 needs to be bonded to the top cover 400, on the side close to the top cover 400, the connecting sheet 500 is still bonded by using the insulating adhesive tape 200 having only the first bonding area 201, the second bonding area 203, and one non-bonding area 202. At this time, two insulating adhesive tapes 200 are used to bond the connecting sheet 500 and the cells 100 on the left and right sides, respectively. A welding area is left between the two insulating adhesive tapes 200, so as to realize welding of the connecting sheet 500 and the top cover 400 in the welding area.

It can be understood that in order to realize welding and electrical connection between the connecting sheet 500 and the tab 300, and the connecting sheet 500 and the top cover 400, the connecting sheet 500 is a metal sheet.

The connecting sheet 500 and the top cover 400 are used as current collectors, the tabs 300 are welded to the connecting sheet 500 and a welding area is defined on the connecting sheet, the welding area and the cell 100 are bonded by using the insulating adhesive tape 200, the top cover 400 is welded to the connecting sheet 500, and then the tabs 300 are bent. After the bending is completed, it can be put into a shell.

In view of this, the process of forming a battery by using the bonding structure generally includes steps as follows:
S310, welding the tab 300 of the cell 100 to the connecting sheet 500 by laser, and defining a welding area on the connecting sheet 500.
S320, bonding the cells 100 and the welding area by using an insulating adhesive tape 200, so that the first bonding area 201 is bonded to the cell 100, the second bonding area 203 is bonded to the welding area, and the non-bonding area 202 is bonded to the bending area of the tab 300.
S330, welding the top cover 400 to the side of the connecting sheet 500 away from the tab 300.
S340, bending the tabs 300.
S350, putting the bonding structure in which the tabs 300 are bent into a shell to form a battery.

In another aspect, embodiments of the present disclosure further provide an bonding method applied to the bonding structure in the aforementioned embodiments. The bonding method includes steps as follows:
welding the tab 300 to the current collector and defining a welding area on the current collector;
bonding the first bonding area 201 to the cell 100 and extending the first extension area of the non-bonding area 202 to the cell 100; and
bonding the second bonding area 203 to the welding area and extending the second extension area of the non-bonding area 202 to the current collector.

In some embodiments, the first bonding area 201, a non-bonding area 202 and a second bonding area 203 are disposed on the insulating adhesive tape 200. The first bonding area 201 is bonded to a cell 100. The second bonding area 203 is bonded to a welding area of the tab 300 and the current collector. The non-bonding area 202 covers a bending area of the tab 300. When the tab 300 is bent, since there is no connection between the non-bonding area 202 and the tab 300, the non-bonding area 202 can improve the problem of the insulating adhesive tape 200 causing tearing stress on the tab 300, and can prevent the tab 300 from being torn by the insulating adhesive tape 200.

The embodiments of the present disclosure further provide an insulating adhesive tape 200. The insulating adhesive tape 200 includes a first bonding area 201 and a second bonding area 203 disposed at intervals, and a non-bonding area 202 disposed between the first bonding area 201 and the second bonding area 203. The first bonding area 201 is configured to bond a cell 100, the second bonding area 203 is configured to bond a welding area formed by a tab 300 of the cell 100 and a current collector, and the non-bonding area 202 is configured to correspond to a bending area of the tab 202.

In some embodiments, the first bonding area 201, a non-bonding area 202 and a second bonding area 203 are disposed on the insulating adhesive tape 200. The first bonding area 201 is configured to bond a cell 100. The second bonding area 203 is configured to bond a welding area of the tab 300 and the current collector. The non-bonding area 202 is configured to cover a bending area of the tab 300. When the tab 300 is bent, since there is no connection between the non-bonding area 202 and the tab 300, the non-bonding area 202 can improve the problem of the insulating adhesive tape 200 causing tearing stress on the tab 300, and can prevent the tab 300 from being torn by the insulating adhesive tape 200.

It can be understood that since the first bonding area 201 is bonded to the cell 100, the second bonding area 203 is bonded to the welding area, the non-bonding area 202 may be attached to the bending area of the tab 300 but not bonded thereto, or the non-bonding area 202 may be spaced from the bending area of the tab 300. When the tab 300 is bent, the bending of the tab 300 will hardly cause displacement of the first bonding area 201 and the second bonding area 203. The only area that can be displaced is the non-bonding area 202 of the insulating adhesive tape 200. Since the non-bonding area 202 cover the tab 300, it will be difficult for the non-bonding area 202 to exert a tearing stress on the tab 300, and the tab 300 can be prevented from being torn.

The insulating adhesive tape 200 is made of insulating materials. The insulating adhesive tape 200 can isolate the tab 300 from the shell of the cell 100 after the tab 300 is bent. The shell of the cell 100 is typically an aluminum shell. Therefore, the insulating adhesive tape 200 mainly plays an insulating role to prevent safety problems caused by thermal runaway result from short circuit between the tab 300 and the aluminum shell.

It can be understood that the side of the insulating adhesive tape 200 facing the cell 100 and the current collector is the bonding side, and the side of the insulating adhesive tape 200 facing away from the cell 100 and the current collector is the non-bonding side. The bonding side is configured to bond the cell 100 and the welding area.

The insulating adhesive tape 200 may be provided in a strip shape. In the length direction of the insulating adhesive tape 200, its adhesive side has a first bonding area 201 and a second bonding area 203 that are disposed at intervals, and the area between the first bonding area 201 and the second bonding area 203 is a non-bonding area 202. As a result, the first bonding area 201, the non-bonding area 202, and the second bonding area 203 can be sequentially distributed along the length direction of the insulating adhesive tape 200.

In some embodiments, the non-bonding area 202 covers the bending area of the tab 300, and the range of the bending area of the tab 300 is less than or equal to the range of the non-bonding area 202. That is, the non-bonding area 202 can completely cover the bending area of the tab 300, thereby preventing occurrence of phenomena such as tearing or the like after the tab 300 is bent, which is caused by the connection between the first bonding area 201 and the second bonding area 203 and the bending area of the tab 300.

In some embodiments, the non-bonding area 202 do not completely cover the bending area of the tab 300. At this time, the first bonding area 201 and/or the second bonding area 203 will have an extended bonding area extending to the bending area of the tab 300. A width of the extended bonding area of the first bonding area 201 attached to the bending area of the tab 300 is D1, wherein D1≤5.0 mm. A width of the extended bonding area of the second bonding area 203 attached to the bending area of the tab 300 is D2, wherein D2≤5.0 mm.

The width D1 of the extended bonding area of the first bonding area 201 is its extension distance along the second direction. The width D2 of the extended bonding area of the second bonding area 203 is also its extension distance along the second direction. The second direction is perpendicular to the first direction.

It can be understood that the first bonding area 201 may have an extended bonding area bonded to a portion of the bending area of the tab 300. The extended bonding area contacts a part area of the tab 300. As a result, when the tab 300 is bent, the tab 300 at the position of the extended bonding area is difficult to form enough stress to tear the tab 300. Therefore, it is also possible to avoid the phenomenon of tearing or the like after the tab 300 is bent.

The extended bonding area of the first bonding area 201 allows the first bonding area 201 to be partially bonded to the bending area of the tab 300, thereby improving the bonding stability of the insulating adhesive tape 200. Meanwhile, since bonding area between the extended bonding area of the first bonding area 201 and the bending area of the tab 300 is small, it is difficult for the insulating adhesive tape 200 to cause tearing of the tab 300 when the tab 300 is bent.

The second bonding area 203 may have an extended bonding area bonded to a portion of the bending area of the tab 300. The extension bonding area contacts a portion area of the tab 300. As a result, when the tab 300 is bent, it is also difficult for the tab 300 at the position of the extended bonding area to form a stress sufficient to tear the tab 300. Therefore, it is also possible to avoid the phenomenon of tearing or the like after the tab 300 is bent.

The extended bonding area of the second bonding area 203 allows the second bonding area 203 to be partially bonded to the bending area of the tab 300, thereby improving the bonding stability of the insulating adhesive tape 200. Meanwhile, since bonding area between the extended bonding area of the second bonding area 203 and the bending area of the tab 300 is small, it is difficult for the insulating adhesive tape 200 to cause tearing of the tab 300 when the tab 300 is bent.

In some embodiments, an extended bonding area may be formed only on the first bonding area 201; it is also possible to form an extended bonding area only on the second bonding area 203; and it is also possible to form extended bonding areas on both the first bonding area 201 and the second bonding area 203. As long as it is ensured that it is difficult to tear the tab 300 during bending of the tab 300 after being bonded to the bending area of the tab 300.

For example, the width D1 of the extended bonding area of the first bonding area 201 bonded to the bending area of the tab 300 can be set to 1 mm, 2 mm, 3 mm, 4 mm, 5 mm, or any value between the two. The width D2 of the extended bonding area of the second bonding area 203 bonded to the bending area of the tab 300 can be set to 1 mm, 2 mm, 3 mm, 4 mm, 5 mm, or any value between the two.

The aforementioned widths D1 and D2 both referred to the second direction described below.

As shown in FIGs. 10 and 11, in some embodiments, the tab 300 has a first side and a second side disposed opposite to each other in a first direction. The insulating adhesive tape 200 has a first redundant bonding area extending out of the first side. The insulating adhesive tape 200 further has a second redundant bonding area extending out of the second side. Both the first redundant bonding area and the second redundant bonding area are bonded to the current collector. A length of the insulating adhesive tape 200 is L, a width of the tab is W, and a sum of widths of the first redundant bonding area and the second redundant bonding area is X1, wherein L≥W+X1.

As shown in FIGs. 10 and 11, since the length L of the insulating adhesive tape 200 is greater than the width W of the tab 300, the insulating adhesive tape 200 can completely cover the tab 300 in the width direction of the tab 300 to ensure the insulating effect. Further, by making the length L of the insulating adhesive tape 200 equal to or greater than the sum of the width W of the tab 300 and a first redundancy amount X1, it can be ensured that the insulating adhesive tape 200 can exceed edge of the tab 300 in the width direction of the tab 300.

When the insulating adhesive tape 200 is bonded to the cell 100 and the welding area, each side of the insulating adhesive tape 200 in the length direction can exceed the tab 300 by a certain distance. That is, in the first direction, the insulating adhesive tape 200 is made to exceed the width of at least the first redundant bonding area on the first side of the tab 300, and the insulating adhesive tape 200 is made to exceed the width of at least the second redundant bonding area on the second side of the tab 300, thereby ensuring that the insulating tape 200 completely covers the tab 300, thus ensuring insulation. For example, the insulating adhesive tape 200 is centrally bonded to the cell and the welding area along the width direction of the tab 300, and opposite sides of the insulating adhesive tape 200 extend beyond the first side and the second side of the tab 300 by 0.5 mm, respectively, to ensure that the tab 300 is completely insulated.

Based on the fact that the insulating adhesive tape 200 is centrally disposed on the tab 300 along the width direction of the tab 300, after the first bonding area 201 and the second bonding area 203 of the insulating adhesive tape 200 are bonded to the cell 100 and the welding area, respectively, both sides of the insulating adhesive tape 200 can be extended by the same distance from both sides of the tab 300. In this way, insulation and aesthetics of both sides of the tab 300 can be ensured.

As shown in FIG. 11, the first direction is the length direction of the insulating adhesive tape 200, and the second direction described below is the width direction of the insulating adhesive tape 200, so that the first direction is perpendicular to the second direction.

Please continue to refer to FIG. 11, in some embodiments, the first redundancy amount X1=1.0×2 mm. That is, the first redundancy amount X1 is preset to be as 2.0 mm. When the insulating adhesive tape 200 is centrally bonded to the tab 300, each side of the insulating adhesive tape 200 in the first direction can extend at least 1 mm beyond the tab 300 to ensure that the tab 300 is completely insulated.

In other embodiments of the present disclosure, the first redundancy amount X1 may also be values such as 3.0 mm, 4.0 mm, 5.0 mm, 6.0 mm, etc., to ensure that the insulating tape 200 can completely insulate the tab 300.

Please continue to refer to FIG. 11, in some embodiments, the width of the first bonding area 201 in the second direction is W1, wherein W1≥5.0 mm. The second direction is perpendicular to the first direction.

Since the width W1 of the first bonding area 201 in the second direction is greater than or equal to 5.0 mm, a sufficient bonding area between the insulating adhesive tape 200 and the cell 100 is ensured, thereby ensuring the bonding strength.

For example, the width W1 of the first bonding area 201 may be set to 5.0 mm, 5.5 mm, 6.0 mm, 7.0 mm, 8.0 mm, or the like, or any value therebetween. The width of the first bonding area 201 can be reasonably selected based on the bonding effect and the cost of the insulating adhesive tape 200.

Please continue to refer to FIG. 11, in some embodiments, in the second direction, the width of the second bonding area 203 is W3, the width of the welding area is W4, the tab 300 is configured to be welded to the current collector under clamping of a jig, and the clamping width of the tab 300 is W5, wherien W3≥W4+W5.

It can be understood that when welding the tab 300 to the current collector, it is necessary to fix the position of the tab 300 and the current collector by auxiliary mechanisms such as jigs and clamps to prevent relative movement between the tab 300 and the current collector during welding and affect the welding quality. The clamping area is usually located on the side of the welding area away from the cell 100. Therefore, at a position away from the cell 100, the second bonding area 203 needs to bond both the welding area and the clamping area, so as to achieve complete coverage of the tab 300. In embodiments of the present disclosure, the width W3 of the second bonding area 203 is made greater than the sum of the width W4 of the welding area and the clamping width W5 of the tab 300, thereby ensuring that the second bonding area 203 completely covers the tab 300 located on one side of the current collector.

In some embodiments, W3≥W4+W5+X2, wherein X2 is a preset second redundancy amount.

Further, the width W3 of the second bonding area 203 is made greater than the sum of the width W4 of the welding area, the clamping width W5 of the tab 300, and the second preset value X2, so that the second bonding area 203 can extend beyond the clamping area by a certain distance, ensuring that the second bonding area 203 can extend to the position of the current collector, so that the second bonding area 203 completely covers the tab 300 on the side of the current collector.

In some embodiments, the second redundancy amount X2=2.0 mm. That is, the second redundancy amount X2 is preset to be as 2.0 mm. When the insulating adhesive tape 200 is centrally bonded to the tab 300, the second bonding area 203 can be at least 2 mm beyond the tab 300 to ensure that the tab 300 is completely insulated.

In other embodiments of the present disclosure, the second redundancy amount X2 may also be values such as 3.0 mm, 4.0 mm, 5.0 mm, 6.0 mm, etc., so as to ensure that the insulating adhesive tape 200 can completely insulate the tab 300.

Please continue to refer to FIGs. 3 and 11, in some embodiments, the width of the non-bonding area 202 in the second direction is W2. The non-bonding area 202 has a first extension area extending to the cell 100. The width of the first extension area is δ1. The non-bonding area 202 further has a second extension area extending to the current collector. The width of the second extension area is δ2. The width of the bending area of the tab 300 is S. The relationship among W2, δ1, δ2 and S satisfies: W2≥δ1+S+δ2, wherein δ1≥0.5 mm and δ2≥0.5 mm.

In a case that W2>δ1+S+δ2, before the tab 300 is bent, the non-bonding area 202 can be disposed loosely, so that the non-bonding area 202 has a certain redundancy amount after the tab 300 is bent, so that the non-bonding area 202 is difficult to pull the first bonding area 201 and the second bonding area 203. In this way, it is ensured that the insulating tape 200 is difficult to tear the tab 300 after the tab 300 is bent.

In a case that W2=δ1+S+δ2, the insulating adhesive tape 200 can also prevent the non-bonding area 202 from pulling the first bonding area 201 and the second bonding area 203 based on its own elasticity. Therefore, it is ensured that it is difficult for the insulating adhesive tape 200 to tear the tab 300 after the tab 300 is bent.

It should be noted that the width S of the bending area of the tab 300 is a distance that the tab 300 extends in the second direction after being bent.

Since the non-bonding area 202 can be extended to the cell 100 and the current collector, the first bonding area 201 and the second bonding area 203 can be effectively prevented from being bonding to the bending area of the tab 300, and the tab 300 can be prevented from being torn and pulled by the first bonding area 201 and the second bonding area 203 during the bending process of the tab 300.

Since the non-bonding area 202 will also cover the entire range of the bending area of the tab 300, the width W2 of the non-bonding area 202 will be equal to the sum of the width S of the bending area of the tab 300, the width δ1 of the first extension area, and the width δ2 of the second extension area.

The width S of the bending area of the tab 300 can be reasonably set based on different types of batteries, types of cells 100, and models of current collectors. For example, the width S of the bending area of the tab 300 may be set to 3.0 mm, 4.0 mm, 5.0 mm, 6.0 mm, or the like.

Among which, δ1≥0.5 mm. For example, the width δ1 of the first extension area may be set to 0.5 mm, 1.0 mm, 1.5 mm, 2.0 mm, or the like. δ2≥0.5 mm. For example, the width δ2 of the second extension area may be set to 0.5 mm, 1.0 mm, 1.5 mm, 2.0 mm, or the like.

Values of the width S of the bending area, the width δ1 of the first extension area, and the width δ2 of the second extension area may be reasonably selected based on various factors such as types of batteries, types of cells 100, models of current collectors, and cost of the insulating adhesive tape 200. As long as there is a certain distance between the first bonding area 201 and the second bonding area 203 and the bending area of the tab 300, so that the bending area of the tab 300 can release stress during the bending process to prevent tearing.

In some embodiments, one side of the first bonding area 201 facing the cell 100 is provided with a first adhesive layer, and the first adhesive layer is a colored adhesive layer.

It can be understood that the first adhesive layer is a back adhesive disposed on the side of the first bonding area 201 facing the cell 100. The back adhesive may be an acrylic adhesive, a polyimide (PI) adhesive, or the like. Since the first adhesive layer is a colored adhesive layer, the first adhesive layer can be identified by a visual identification system, so that a mechanical equipment knows which side of the insulating adhesive tape 200 is the bonding side, thereby realizing a foolproof design and preventing bonding errors, and the like.

Since the first adhesive layer is a colored adhesive layer, the first adhesive layer can also be recognized by the visual recognition system. By identifying the first adhesive layer through the visual recognition system, it can be determined whether the bonding is completed, and the bonding size between the cell 100 and the insulating adhesive tape 200 can be detected.

For example, the first adhesive layer is a gray adhesive layer, a yellow adhesive layer, a red adhesive layer, a blue adhesive layer, or the like, so long as the first adhesive layer can form a color difference with white. The color of the first adhesive layer is not limited in embodiments of the present disclosure.

In some embodiments, one side of the second bonding area 203 facing the welding area is provided with a second adhesive layer, and the second adhesive layer is a colored adhesive layer.

It can be understood the second adhesive layer is a back adhesive disposed on the side of the second bonding area 203 facing the welding area. The back adhesive can be selected from an acrylic adhesive, a polyimide (PI) adhesive, or the like. Since the second adhesive layer is a colored adhesive layer, the second adhesive layer can be identified by the visual identification system, so that the mechanical equipment knows which side of the insulating adhesive tape 200 is the bonding side, thereby realizing a foolproof design and preventing bonding errors, and the like.

Since the second adhesive layer is a colored adhesive layer, the second adhesive layer can also be recognized by the visual recognition system. By recognizing the second adhesive layer by the visual recognition system, it can be determined whether the bonding is completed, and the bonding size between the current collector and the insulating adhesive tape 200 can be detected.

For example, the second adhesive layer is a gray adhesive layer, a yellow adhesive layer, a red adhesive layer, a blue adhesive layer, or the like, so long as the second adhesive layer can form a color difference with white. The color of the second adhesive layer is not limited in embodiments of the present disclosure.

The aforementioned first adhesive layer and the second adhesive layer are both non-transparent colored adhesive layers, so that the first adhesive layer and the second adhesive layer can be recognized by the visual recognition system.

In some embodiments, the color of the second adhesive layer is the same as that of the first adhesive layer, both of which can adopt a back adhesive with the same color. For example, both the first adhesive layer and the second adhesive layer are blue adhesive layers.

In some embodiments, the color of the second adhesive layer is different from that of the first adhesive layer, both of which adopts a colored back adhesive. For example, the first adhesive layer is a blue adhesive layer and the second adhesive layer is a yellow adhesive layer.

In some embodiments, the non-bonding area 202 is a transparent area.

It can be understood that since the non-bonding area 202 is a transparent area, the information of the tab 300 located inside the non-bonding area 202 can be identified by a visual identification system. After the tabs 300 are bent, the visual recognition system can identify the state of the tabs 300 below through the non-bonding area 202, so as to judge whether a tab 300 is torn or not, and detect the size of the tab 300 after the tearing occurs. In this way, defective cells 100 can be excluded, and the potential safety hazard caused by the defective cells 100 flowing into the market can be prevented.

The transparency of the non-bonding area 202 needs to reach a certain degree, within which the visual recognition system can penetrate through the non-bonding area 202 and recognize the tabs below. The transparency of the non-bonding area 202 is specifically selected according to the recognition ability of the visual recognition system, and the transparency of the non-bonding area 202 is not limited in embodiments of the present disclosure.

In some embodiments, the insulating adhesive tape 200 further includes a third bonding area 204. The first bonding area 201, the second bonding area 203, and the third bonding area 204 are sequentially disposed at intervals, so as to form the non-bonding area 202 between the first bonding area 201 and the second bonding area 203, and to form the non-bonding area 202 between the second bonding area 203 and the third bonding area 204, respectively. The insulating adhesive tape 200 is configured to bond two cells 100 and a current collector. The first bonding area 201 is configured to bond one of the cells 100, abd the third bonding area 204 is configured to bond the other one of the cells 100. The tabs 300 of the two cells 100 are welded to the same current collector to form two welding areas disposed at intervals on the current collector. The second bonding area 203 is configured to bond to the two welding areas and an area between the two welding areas. Each of the non-bonding areas 202 is configured to cover a bending area of one of the tabs 300, respectively.

The insulating adhesive tape 200 having the first bonding area 201, the second bonding area 203, and the third adhesive region 204 has three adhesive areas. As shown in FIG. 2, before cells 100 are folded, the two cells 100 are horizontally distributed to the left and right, and a connecting sheet 500 is located between the two cells 100. The tabs 300 of each cell 100 are welded to the left and right sides of the connecting sheet 500, respectively. Therefore, two welding areas can be formed on the connecting sheet 500. The first bonding area 201 is bonded to one of the cells 100, and the third bonding area 204 is bonded to the other of the cells 100, so that the second bonding area 203 completely covers the two welding areas and area between the two welding areas, so that one insulating adhesive tape 200 can bond two cells 100 and one connecting sheet 500. After the bonding is completed, the two cells 100 are folded in a direction where large surfaces are close to each other, thereby realizing bending of the tabs 300 and completing the cell-folding process.

When the insulating adhesive tape 200 is used to bond two cells 100, it can facilitate the rapid bonding of insulating adhesive tape 200 and improve the bonding efficiency.

In another aspect, embodiments of the present disclosure further provide a bonding structure. The bonding structure includes the insulating adhesive tape 200, the cell 100, and the current collector mentioned in the foregoing embodiments. The cell 100 is connected with a bendable tab 300. The current collector is welded to one side of the tab 300 away from the cell 100, and defining a welding area on the current collector. The insulating adhesive tape 200 has a first bonding area 201 and a second bonding area 203 disposed at intervals, and a non-bonding area 202 disposed between the first bonding area 201 and the second bonding area 203. The first bonding area 201 is bonded to the cell 100. The second bonding area 203 is bonded to the welding area. The non-bonding area 202 corresponds to the bending area of the tab 300.

In some embodiments, the first bonding area 201, a non-bonding area 202 and a second bonding area 203 are disposed on the insulating adhesive tape 200. The first bonding area 201 is bonded to a cell 100. The second bonding area 203 is bonded to a welding area of the tab 300 and the current collector. The non-bonding area 202 covers a bending area of the tab 300. When the tab 300 is bent, since there is no connection between the non-bonding area 202 and the tab 300, it is difficult for the non-bonding area 202 to generate tearing stress on the tab 300, which can prevent the tab 300 from being torn by the insulating adhesive tape 200.

The current collector and the cell 100 are disposed at intervals. The first side of the tab 300 is connected to the cell 100, and the second side of the tab 300 is connected to the current collector. The bending area of the tab 300 is the position on the tab 300 between the cell 100 and the current collector. During the bending of the tab 300, this part of the area will be bent. The connection area between the tab 300 and the cell 100 and the welding area between the tab 300 and the current collector are difficult to be bent.

Since the non-bonding area 202 covers the bending area of the tab 300, the range of the bending area of the tab 300 is less than or equal to the range of the non-bonding area 202. That is, the non-bonding area 202 can completely cover the bending area of the tab 300, thereby preventing occurrence of phenomena such as tearing or the like after the tab 300 is bent, which is caused by the connection between the first bonding area 201 and the second bonding area 203 and the bending area of the tab 300.

The cell 100 is an important component of the battery. The cell 100 mainly includes positive electrode active materials, a positive electrode current collector, a separator, negative electrode active materials, and a negative electrode current collector, and the like. The charging and discharging of the cell 100 is performed by storing and releasing energy through the deintercalation of lithium. The outermost separator of the cell 100 is bonded to the insulating adhesive tape 200.

The current collector is a welding component of the tab 300, which can be a top cover 400, or a combination of the top cover 400 and the connecting sheet 500. The current collector may be welded to the tabs 300 by laser welding, ultrasonic welding, or the like. After welding, an electronic channel can be formed to realize electric transmission. After the welding is completed, a welding area with a certain width will be formed in the welding area.

As shown in FIGs. 5 to 9, in some embodiments, the current collector includes a top cover 400. The tabs 300 are welded to the top cover 400, and a welding area is defined on the top cover 400. The polarity of any two tabs 300 welded to the same top cover 400 is the same.

The top cover 400 is used as a current collector, the tabs 300 are welded to the top cover 400 and a welding area is defined on the top cover 400, and the welding area and the cell 100 are bonded by the insulating adhesive tape 200, and then the tabs 300 are bent. After the bending is completed, it can be put into a shell.

It can be understood that any two tabs 300 welded to the same top cover 400 can be both positive tabs. Any two tabs 300 welded to the same top cover 400 may also be both negative tabs.

As shown in FIGs. 6 and 7, the process of forming a battery by using a bonding structure generally includes steps as follows:
S110, welding tabs 300 to a top cover 400 by laser, and defining a welding area.
S120, bonding cells 100 and the welding area by using an insulating adhesive tape 200, so that the first bonding area 201 is bonded to the cell 100, the second bonding area 203 is bonded to the welding area, and the non-bonding area 202 is attached to the bending area of the tabs 300.
S130, bending the tabs 300.
S140, putting the bonding structure in which the tabs 300 are bent into a shell to form a battery.

As shown in FIGs. 8 and 9, in some embodiments, wherein one side of the top cover 400 is configured with a first connecting portion and a second connecting portion that are bendable. The first connecting portion and the second connecting portion are disposed at intervals. At least two cells 100 are provided. The first connecting portion is welded to the tab 300 of one of the cells 100, and the first connecting portion is configured to be bent in a bending direction of the tab 300 under an action of an external force. The second connecting portion is welded to the tab 300 of another cell 100, and the second connecting portion is configured to be bent in a bending direction of this tab 300 under an action of an external force.

As shown in FIG. 8, for two adjacent cells 100, the two cells 100 may be stacked. The top cover 400 is disposed on one side of the two stacked cells 100, or two opposite sides of the two stacked cells 100 are respectively provided with a top cover 400. The top cover 400 may be centrally disposed between the two cells 100. Each cell 100 is provided with a tab 300, and pins of each tab 300 may be ultrasonically welded to the first connecting portion and the second connecting portion, respectively.

Each of the first connecting portion and the second connecting portion is a pin integrally formed on the top cover 400.

In some embodiments, the first connecting portion and the second connecting portion are located on the same side of the top cover 400 close to the edges. As shown in FIG. 9, the first connecting portion and the second connecting portion may be bent in a direction approaching each other under the action of an external force. At this time, the first connecting portion and the second connecting portion can be attached to the top cover 400 after being bent. The first connecting portion and the second connecting portion may be bent away from each other under the action of an external force. At this time, the first connecting portion and the second connecting portion may be disposed coplanar with the top cover 400 after being bent.

It can be understood that for two adjacent cells 100, when the bending directions of the two tabs 300 are close to each other, the first connecting portion and the second connecting portion are bent in a direction close to each other under the action of an external force. When the bending directions of the two tabs 300 are away from each other, the first connecting portion and the second connecting portion are bent away from each other under the action of an external force.

It should be noted that the external force mentioned in the embodiments of the present disclosure may be a force of the mechanical arm driving the first connecting portion and the second connecting portion to bend, or a force that drives the first connecting portion and the second connecting portion to bend by manual bending.

The top cover 400 is used as a current collector, the tabs 300 are welded to the first connecting portion and the second connecting portion of the top cover 400, a welding area is defined on the first connecting portion and the second connecting portion, respectively, and the welding area and the cell 100 are bonded by the insulating adhesive tape 200, and then the tabs 300 are bent. After the bending is completed, it can be put into a shell.

Please continue to refer to FIGs. 8 and 9, the process of forming a battery by using the bonding structure generally includes steps as follows:
S210, welding tabs 300 of the two cells 100 to the first connecting portion and the second connecting portion of the top cover 400 by laser, respectively, and defining a welding area on the first connecting portion and the second connecting portion, respectively.
S220, bonding the welding area on the first connecting portion and the corresponding cell 100, and bonding the welding area on the second connecting portion and the corresponding cell 100 by using two insulating adhesive tapes 200, so that the first bonding area 201 is bonded to the cell 100, the second bonding area 201 is bonded to the welding area, and the non-bonding area 202 is bonded to the bending area of the tab 300.
S230, bending the tabs 300, and bending the first connecting portion and the second connecting portion based on the bending direction of the tabs 300.
S240, putting the bonding structure in which the tabs 300 are bent into a shell to form a battery.

As shown in FIG. 4, in some embodiments, the current collector includes a tab 500 and a top cover 400. The tabs 300 are welded to the connecting sheet 500, and a welding area is defined on the connecting sheet 500. Any two tabs 300 welded to the same connecting sheet 500 have the same polarity. The top cover 400 is connected to the side of the connecting sheet 500 away from the cell 100.

The current collector is formed by introducing a connecting sheet 500 and cooperating with the top cover 400. At this time, the tabs 300 can be welded to the connecting sheet 500, and there is no need to directly connect the tabs 300 with the top cover 400. After the tabs 300 are welded to the connecting sheet 500, they are bonded by the insulating adhesive tape 200, and the top cover 400 is welded to the side of the connecting sheet 500 away from the cell 100, so that the insulation between the tabs 300 and the aluminum shell can be ensured after being put into the shell.

It can be understood that any two tabs 300 welded to the same tab 500 may be both positive tabs. Alternatively, any two tabs 300 welded to the same tab 500 may also be negative tabs.

Two opposite sides of the connecting sheet 500 may be connected to the cell 100 through the insulating adhesive tape 200. When the number of the cells 100 and the number of the connecting sheet 500 are both set to one, the connecting sheet 500 and the cells 100 are bonded by two insulating adhesive tapes 200. The first bonding area 201 of one of the two insulating adhesive tapes 200 is bonded to the upper surface of the cell 100, the second bonding area 203 of this insulating adhesive tape 200 is bonded to the welding area on the upper surface of the connecting sheet 500, and the non-bonding area 202 of this insulating adhesive tape 200 is located above the bending area of the tab 300. The first bonding area 201 of the other insulating adhesive tape 200 is bonded to the lower surface of the cell 100, the second bonding area 203 of this insulating adhesive tape 200 is bonded to the welding area of the lower surface of the connecting sheet 500, and the non-bonding area 202 of this insulating adhesive tape 200 is located below the bending area of the tab 300.

As shown in FIG. 2, when the number of the cells 100 is set to two, each cell 100 has only one tab 300, and the number of the connecting sheet 500 is set to one, four insulating adhesive tapes 200 can be used to bond the connecting sheet 500 and the cells 100.

As shown in FIG. 12, in some embodiments, the insulating adhesive tape 200 further includes a third bonding area 204. The first bonding area 201, the second bonding area 203, and the third bonding area 204 are sequentially disposed at intervals, so as to form the non-bonding area 202 between the first bonding area 201 and the second bonding area 203, and to form the non-bonding area 202 between the second bonding area 203 and the third bonding area 204, respectively. At least two cells 100 are provided. The first bonding area 201 is bonded to one of the cells 100, the third bonding area 204 is bonded to another one of the cells 100, and the tabs 300 of the two cells 100 are welded to a same connecting sheet 500 to form two welding areas disposed at intervals on the connecting sheet 500. The second bonding area 203 is bonded to the two welding areas and an area between the two welding areas, and the two non-bonding areas 202 are respectively covered on the bending areas of the tabs 300 of the two cells 100.

It can be understood that the insulating adhesive tape 200 having the first bonding area 201, the second bonding area 203, and the third adhesive region 204 has three adhesive areas. As shown in FIG. 2, before cells 100 are folded, the two cells 100 are horizontally distributed to the left and right, and a connecting sheet 500 is located between the two cells 100. The tabs 300 of each cell 100 are welded to the left and right sides of the connecting sheet 500, respectively. Therefore, two welding areas can be formed on the connecting sheet 500. The first bonding area 201 is bonded to one of the cells 100, and the third bonding area 204 is bonded to the other of the cells 100, so that the second bonding area 203 completely covers the two welding areas and area between the two welding areas, so that one insulating adhesive tape 200 can bond two cells 100 and one connecting sheet 500. After the bonding is completed, the two cells 100 are folded in a direction where large surfaces are close to each other, thereby realizing bending of the tabs 300 and completing the cell-folding process.

When the insulating adhesive tape 200 is used to bond two cells 100, it can facilitate the rapid bonding of insulating adhesive tape 200 and improve the bonding efficiency.

Here, when the bonding of the connecting sheet 500 is realized by the insulating adhesive tape 200, since the connecting sheet 500 needs to be bonded to the top cover 400, on the side close to the top cover 400, the connecting sheet 500 is still bonded by using the insulating adhesive tape 200 having only the first bonding area 201, the second bonding area 203, and one non-bonding area 202. At this time, two insulating adhesive tapes 200 are used to bond the connecting sheet 500 and the cells 100 on the left and right sides, respectively. A welding area is left between the two insulating adhesive tapes 200, so as to realize welding of the connecting sheet 500 and the top cover 400 in the welding area.

It can be understood that in order to realize welding and electrical connection between the connecting sheet 500 and the tab 300, and the connecting sheet 500 and the top cover 400, the connecting sheet 500 is a metal sheet.

The connecting sheet 500 and the top cover 400 are used as current collectors, the tabs 300 are welded to the connecting sheet 500 and a welding area is defined on the connecting sheet, the welding area and the cell 100 are bonded by using the insulating adhesive tape 200, the top cover 400 is welded to the connecting sheet 500, and then the tabs 300 are bent. After the bending is completed, it can be put into a shell.

In view of this, the process of forming a battery by using the bonding structure generally includes steps as follows:
S310, welding the tab 300 of the cell 100 to the connecting sheet 500 by laser, and defining a welding area on the connecting sheet 500.
S320, bonding the cells 100 and the welding area by using an insulating adhesive tape 200, so that the first bonding area 201 is bonded to the cell 100, the second bonding area 203 is bonded to the welding area, and the non-bonding area 202 is bonded to the bending area of the tab 300.
S330, welding the top cover 400 to the side of the connecting sheet 500 away from the tab 300.
S340, bending the tabs 300.
S350, putting the bonding structure in which the tabs 300 are bent into a shell to form a battery.

In another aspect, embodiments of the present disclosure further provide a battery. The battery includes a shell and and one or more cells 100 accommodated in the shell. The one or more cells 100 employ the bonding structure as in the above-mentioned embodiments.

In some embodiments, the first bonding area 201, a non-bonding area 202 and a second bonding area 203 are disposed on the insulating adhesive tape 200. The first bonding area 201 is bonded to a cell 100. The second bonding area 203 is bonded to a welding area of the tab 300 and the current collector. The non-bonding area 202 covers a bending area of the tab 300. When the tab 300 is bent, since there is no connection between the non-bonding area 202 and the tab 300, it is difficult for the non-bonding area 202 to generate tearing stress on the tab 300, which can prevent the tab 300 from being torn by the insulating adhesive tape 200.

## Claims

1. An bonding structure comprising:
one or more cells, each of the one or more cells being connected with at least one bendable tab;
a current collector welded to one side of the at least one tab away from the one or more cells and defining a welding area on the current collector; and
one or more insulating adhesive tapes, each of the one or more insulating adhesive tape having a first bonding area and a second bonding area disposed at intervals, and a non-bonding area disposed between the first bonding area and the second bonding area, the first bonding area being bonded to the one or more cells, the second bonding area being bonded to the welding area, and the non-bonding area corresponding to a bending area of the tab;
wherein, in a first direction, the tab has a first side and a second side disposed opposite to each other, each of the one or more insulating adhesive tapes has a first redundant bonding area extending out of the first side, each of the one or more insulating adhesive tapes further has a second redundant bonding area extending out of the second side, both the first redundant bonding area and the second redundant bonding area are bonded to the current collector, a length of each of the one or more insulating adhesive tapes is L, a width of the tab is W, and a sum of widths of the first redundant bonding area and the second redundant bonding area is X1, wherein L≥W+X1.

2. The bonding structure of claim 1, wherein the non-bonding area covers the bending area of the tab.

3. The bonding structure according to claim 1 or 2, wherein the first bonding area and/or the second bonding area have/has an extended bonding area bonded to a bending area of the tab; a width of the extended bonding area of the first bonding area attached to the bending area of the tab is D1, and D1≤5.0 mm; and a width of the extended bonding area of the second bonding area attached to the bending area of the tab is D2, and D2≤5.0 mm.

4. The bonding structure according to any one of claims 1 to 3, wherein a width of the first bonding area in a second direction is W1, W1≥5.0 mm, and the second direction is perpendicular to the first direction.

5. The bonding structure according to any one of claims 1 to 4, wherein in the second direction, a width of the second bonding area is W3, a width of the welding area is W4, and the tab is clamped and welded to the current collector by a jig, and the clamping width of the tab is W5, wherien W3≥W4+W5, and the second direction is perpendicular to the first direction.

6. The bonding structure according to any one of claims 1 to 5, wherein in the second direction, the width of the non-bonding area is W2, the non-bonding area has a first extension area extending to the one or more cells, and the first extension area has a width of δ1; the non-bonding area further has a second extension area extending to the current collector, and the second extension area has a width of δ2; a width of the bending area of the tab is S, wherien W2≥δ1+S+δ2, δ1≥0.5 mm, δ2≥0.5 mm, and the second direction is perpendicular to the first direction.

7. The bonding structure according to any one of claims 1 to 6, wherein a central axis of each of the one or more insulating adhesive tapes coincides with a central axis of the tab in the first direction.

8. The bonding structure according to any one of claims 1 to 7, wherein one side of the first bonding area facing the one or more cells is provided with a first adhesive layer, and the first adhesive layer is a colored adhesive layer.

9. The bonding structure according to any one of claims 1 to 8, wherein one side of the second bonding area facing the welding area is provided with a second adhesive layer, and the second adhesive layer is a colored adhesive layer.

10. The bonding structure according to any one of claims 1 to 9, wherein the non-bonding area is a transparent area.

11. The bonding structure according to any one of claims 1 to 10, wherein the current collector comprises:
a top cover, wherein the tab is welded to the top cover, and the welding area is defined on the top cover, and any two of the tabs welded to the top cover have a same polarity.

12. The bonding structure according to claim 11, wherein one side of the top cover is configured with a first connecting portion and a second connecting portion that are bendable, the first connecting portion and the second connecting portion are disposed at intervals, a number of the one or more cells is at least two, the first connecting portion is welded to the tab of one of the at least two cells, the first connecting portion is configured to be bent in a bending direction of the tab under an action of an external force, the second connecting portion is welded to the tab of another one of the at least two cells, and the second connecting portion is configured to be bent in a bending direction of the tab of another one of the at least two cells under an action of an external force.

13. The bonding structure according to any one of claims 1 to 12, wherein the current collector comprises:
a connecting sheet, wherein the tab is welded to the connecting sheet, and the welding area is defined on the connecting sheet, any two of the tabs welded to a same connecting sheet have a same polarity; and
a top cover connected to one side of the connecting sheet away from the one or more cells.

14. The bonding structure according to claim 13, wherein each of the one or more insulating adhesive tapes further comprises a third bonding area, the first bonding area, the second bonding area, and the third bonding area are sequentially disposed at intervals to form the non-bonding area between the first bonding area and the second bonding area, and to form the non-bonding area between the second bonding area and the third bonding area, respectively; and
wherein a number of the one or more cells is two, the first bonding area is bonded to one of the two cells, the third bonding area is bonded to another one of the two cells, and the tabs of the two cells are welded to a same connecting sheet to form two welding areas disposed at intervals on the connecting sheet, wherein the second bonding area is bonded to the two welding areas and an area between the two welding areas, and the two non-bonding areas are respectively covered on the bending areas of the tabs of the two cells.

15. A bonding method applied to the bonding structure according to any one of claims 1 to 14, comprising:
welding the tab to the current collector and defining a welding area on the current collector;
bonding the first bonding area to the one or more cells and extending the first extension area of the non-bonding area to the one or more cells; and
bonding the second bonding area to the welding area and extending the second extension area of the non-bonding area to the current collector.

16. An insulating adhesive tape comprising a first bonding area and a second bonding area disposed at intervals, and a non-bonding area disposed between the first bonding area and the second bonding area, wherein the first bonding area is configured to bond one or more cells, the second bonding area is configured to bond a welding area formed by a tab of each of the one or more cells and a current collector, and the non-bonding area is configured to correspond to a bending area of the tab.

17. The insulating adhesive tape according to claim 16, wherein the non-bonding area is configured to cover the bending area of the tab.

18. The insulating adhesive tape according to claim 1 or 17, wherein the first bonding area and/or the second bonding area have/has an extended bonding area bonded to a bending area of the tab; a width of the extended bonding area of the first bonding area attached to the bending area of the tab is D1, and D1≤5.0 mm; and a width of the extended bonding area of the second bonding area attached to the bending area of the tab is D2, and D2≤5.0 mm.

19. The insulating adhesive tape according to claim 18, wherein in a first direction, the tab has a first side and a second side disposed opposite to each other, the insulating adhesive tape has a first redundant bonding area extending out of the first side, the insulating adhesive tape further has a second redundant bonding area extending out of the second side, both the first redundant bonding area and the second redundant bonding area are bonded to the current collector, a length of the insulating adhesive tape is L, a width of the tab is W, and a sum of widths of the first redundant bonding area and the second redundant bonding area is X1, wherein L≥W+X1.

20. The insulating adhesive tape according to claim 19, wherein a width of the first bonding area in a second direction is W1, W1≥5.0 mm, and the second direction is perpendicular to the first direction.

21. The insulating adhesive tape according to claim 18 or 19, wherein in the second direction, a width of the second bonding area is W3, a width of the welding area is W4, and the tab is configured to be welded to the current collector under clamping of a jig, and the clamping width of the tab is W5, wherien W3≥W4+W5, and the second direction is perpendicular to the first direction.

22. The insulating adhesive tape according to claim 21, wherein in the second direction, the width of the non-bonding area is W2, the non-bonding area has a first extension area extending to the one or more cells, and the first extension area has a width of δ1; the non-bonding area further has a second extension area extending to the current collector, and the second extension area has a width of δ2; a width of the bending area of the tab is S, wherien W2≥δ1+S+δ2, δ1≥0.5 mm, δ2≥0.5 mm, and the second direction is perpendicular to the first direction.

23. The insulating adhesive tape according to any one of claims 16 to 22, wherein the first bonding area is provided with a first adhesive layer, and the first adhesive layer is a colored adhesive layer.

24. The insulating adhesive tape according to any one of claims 16 to 23, wherein the second bonding area is provided with a second adhesive layer, and the second adhesive layer is a colored adhesive layer.

25. The insulating adhesive tape according to any one of claims 16 to 24, wherein the non-bonding area is a transparent area.

26. The insulating adhesive tape according to any one of claims 16 to 25, wherein the insulating adhesive tape further comprises a third bonding area, the first bonding area, the second bonding area, and the third bonding area are sequentially disposed at intervals to form the non-bonding area between the first bonding area and the second bonding area, and to form the non-bonding area between the second bonding area and the third bonding area, respectively; and
wherein the insulating adhesive tape is configured to bond two of the one or more cells and one of the current collector, the first bonding area is configured to bond one of the two cells, the third bonding area is configured to bond another one of the two cells, and the tabs of the two cells are welded to a same of the current collector to form two welding areas disposed at intervals on the current collector, wherein the second bonding area is configured to bond to the two welding areas and an area between the two welding areas, and each of the non-bonding areas is configured to cover a bending area of one of the tabs, respectively.

27. A battery comprising a shell and one or more cells accommodated in the shell, the one or more cells being connected to the current collector and the tabs by using the insulating adhesive tape according to any one of claims 16 to 26.
